# EUROPÄISCHE PATENTSCHRIFT

(11) **EP 1 132 666 B1**
(45) Veröffentlichungstag und Bekanntmachung des Hinweises auf die Patenterteilung: **07.06.2006**
(21) Anmeldenummer: 01810216.0
(22) Anmeldetag: 02.03.2001
(51) Int. Cl.: B23Q 11/00, B25F 5/00, B08B 15/04

(54) **Staubschutz sowie dessen Verwendung bei einem Elektrohandwerkzeuggerät und Werkzeug**
Dust seal as well as its utilisation on an electric hand tool and tool
Joint anti-poussière et son utilisation pour outil éléctroportatif et outil ainsi équipé

(30) Priorität: 11.03.2000 DE 10011999
(43) Veröffentlichungstag der Anmeldung: 12.09.2001
(73) Patentinhaber: HILTI Aktiengesellschaft, 9494 Schaan (LI)
(72) Erfinder: Hofmann, Karl-Heinz, 86947 Weil (DE); Löffler, Alexander, 86916 Kaufering (DE)
(74) Vertreter: Wildi, Roland

(56) Entgegenhaltungen:
- EP-A- 0 909 747
- WO-A-96/04123
- US-A- 5 410 922
- US-A- 5 791 977

## Beschreibung

Die Erfindung betrifft einen Staubschutz sowie eine Verwendung des Staubschutzes bei einem abrasiv Material abtragenden Elektrohandwerkzeuggerät, vorzugsweise einem Bohr-, Meissel-, Fräs-, Säge- oder Schleifgerät, sowie bei einem zugeordneten Werkzeug.

Entstehender Staub wird zur Minimierung seiner nachteiligen Wirkungen in Geräten üblicherweise in Kombination:
- nahe der Quelle seiner Entstehung abgefangen, wodurch weniger im die Quelle umgebenden Raum freigesetzt wird;
- am Eindringen in Geräte gehindert, wodurch weniger in das Innere gelangt, insbesondere bezüglich der Kriechstäube;
- an der Anlagerung im Inneren gehindert, wodurch weniger im Inneren verbleibt. Dazu werden üblicherweise Staubabsaugungen, Staubfilter, Staubbarrieren und Staubfallen benutzt. Staubfallen sind örtlich begrenzte, in staubbefallenen Geräten angeordnete, körperliche oder flächige Objekte, welche für freie Staubteilchen als Staubsenke wirken und bei konstantem Staubeintrag in dieses Gerät somit die verbleibende, freie Staubkonzentration im Gerät senken. Kriechstäube, welche aus aneinander koagulierten, einzeln wandernden, Staubteilchen bestehen, wandern bevorzugt über freie, glatte Oberflächen, da diese einer Bewegung entlang dieser nur geringe Widerstände in Form natürlicher Potentialbarrieren entgegensetzen. Zur Vermeidung der Wanderung derartiger Kriechstäube können künstliche Staubbarrieren eingesetzt werden, welche entweder das Eindringen oder das Verlassen des Barrierenbereiches für Staubteilchen erschweren. Staubbarrieren sind körperliche oder flächige Objekte, welche die Ausbreitung von Staubteilchen in einer Richtung durch einen Ausbreitungswiderstand und eine möglichst unendliche Ausdehnung, vorteilhaft in sich geschlossen, quer zu dieser Richtung behindern. Dies wird nachfolgend am Beispiel von abrasiv Material abtragenden, somit notwendig Staub erzeugenden, Handwerkzeuggeräten und Werkzeugen näher beschrieben, ohne die Erfindung auf dieses Gebiet zu beschränken.

Der beim abrasiven Materialabtrag entstehende Staub, wie Bohr- oder Sägemehl bzw. -späne, weist wesentliche Fraktionen mit einer derart kleine Grössenstruktur auf, welche geeignet ist, über die bewegte Luft über Entfernungen einiger cm bis mehrerer Meter transportiert zu werden, und sich begünstigt durch dessen relativ zur Masse grossen Oberfläche an sämtlichen freien Oberflächen des Elektrohandwerkzeuggeräts und Werkzeugs adhäsiv anlagert, insbesondere an konkav gekrümmten Oberflächen und solchen an Orten geringer Strömungsgeschwindigkeit. Eine beim abrasiven Materialabtrag sowie beim Entlanggleiten an dielektrischen Oberflächen mögliche elektrostatische Aufladung sowie eine hohe Luftfeuchtigkeit unterstützen eine derartige Anlagerung zusätzlich. Zudem kriecht insbesondere an glatten Oberflächen angelagerter Staub auf diesen weiter entlang.

Insbesondere bei Elektrohandwerkzeuggeräten mit einem integrierten elektrischen Antrieb und optionaler Luftkühlung wirken sich derartige Staubanlagerungen nachteilig aus. Bezüglich beweglichen Teilen des Antriebs erhöhen sie die Reibung und verkürzen über erhöhten Verschleiss die Lebensdauer der Lagerung, bezüglich der Leistungselektrik und Leistungselektronik ermöglichen Sie die Ausbildung leitfähiger Querverbindungen, welche die Funktionsweise und Sicherheit beeinträchtigen, sowie vermindern durch ihre Anlagerung die Wärmeableitung durch Luftkonvektion und Strahlung, wodurch sich die Lebensdauer durch höhere Betriebstemperaturen verringert.

Beispielsweise ist für derartige Elektrohandwerkzeuggeräte aus der Druckschrift DE3126511 eine mit dem Elektrohandwerkzeuggerät verbundene, das Werkzeug umfänglich umgebende und am Werkstück teilweise dicht anliegende, als Faltenbalg ausgebildete, transparente Staubschutzkappe bekannt, aus welcher über einen Absaugstutzen mittels eines Unterdrucks der bei der abrasiven Bearbeitung des Materials entstehende Staub abgesaugt wird. Nach der Druckschrift DE19854874A1 wird der beim abrasiven Materialabtrag entstehende Staub bereits kurz hinter der Schneide des Werkzeugs durch das hohle Werkzeug hindurch über einen Unterdruck abgesaugt.

Nach der Druckschrift DE29812699U1 weist ein Elektrohandwerkzeuggerät zum Abtransport des abrasiv abgetragenen Materials vom Werkzeug wegführende und mit einem Luftstrom beaufschlagte Spanförderkanäle auf, welche durch eine eingestülpte äussere Oberfläche ausgebildet werden. Zur Minderung der Verstopfungsneigung durch das abrasiv abgetragene Material werden die Oberflächen der Spanförderkanäle in höchster Oberflächengüte glatt ausgeführt, indem die Kunststoffoberflächen mit einer metallischen oder keramischen Oberflächenschicht versehen, insbesondere verchromt, werden. Der sich auch an glatten Oberflächen ablagernde Staub kriecht jedoch insbesondere an diesen glatten Oberflächen gut entlang.

Über verschiedene konstruktive Massnahmen wird versucht, das Eindringen des Staubes in das den staubempfindlichen elektrischen Antrieb enthaltene Innere des Elektrohandwerkzeuggeräts weitgehend zu unterdrücken, bspw. nach der Druckschrift DE4136584 durch eine mit dem Gehäuse verbundene Verriegelungshülse zur spaltarmen beweglichen Aufnahme des Werkzeuges oder nach der Druckschrift DE3418882 durch eine Staubschutzkappe mit den Schaft des drehenden bzw. schwingenden Werkzeugs umfassenden elastischen Dichtlippen. Enge Spalten unterdrücken zwar den Staubeintrag über bewegte Luft, fördern hingegen, durch den Kapillareffekt, den über Kriechstäube. Dichtlippen sind als Verschleissteil nur begrenzt als Staubbarriere zur dauerhaften Verminderung von Kriechstäuben geeignet.

Nachteilig bei all diesen Lösungen ist der verbleibende, sich weiterhin sukzessiv anlagernde, Staubanteil, welcher über die Luftbewegung oder die Oberflächen des Werkzeuges und innerer Teile kriechend in das Innere des Elektrohandwerkzeuggeräts eindringt und sich dort zumeist durch Feuchtigkeit koaguliert an kritischen Orten absetzt, was die Funktionstüchtigkeit und Lebensdauer des Elektrohandwerkzeuggeräts begrenzt.

Aus der Drukschrift US 5410922 A ist eine Vorrichtung gemäß dem Oberbegriff des Anspruchs 1 bekannt.

Aus der Druckschrift EP772514B1 sind künstliche selbstreinigende Oberflächen nach dem "Lotus-Effekt" und deren Verwendung zur Selbstreinigung bekannt, welche durch eine hydrophobe mikrokristallin genoppte Mikrostruktur eine Benetzung mit Wasser verhindern, wodurch auf derartige Oberflächen aufgebrachte Wassertropfen die dort angelagerten Staubteilchen in sich aufnehmen und abtransportieren. Somit sorgen regelmäßig aufgebrachte Wassertropfen, in der Natur durch den Regen, für eine effektive Selbstreinigung derartiger Oberflächen. Die Druckschrift EP909747A1 offenbart ein Verfahren zur Erzeugung derartiger selbstreinigende Oberflächen auf der Basis einer Schutzschicht von in einer aushärtbaren Silofanlösung dispergierten Pulverpartikeln aus keramischem Material, vorzugsweise zur Beschichtung von Dachziegeln. Die Anwendung dieser selbstreinigenden Oberflächen als solche auf sichtbare äussere sowie auf innere Strukturen wie Silos oder Rohre zur besseren Reinigung dieser über bewegtes Wasser ist prinzipiell bekannt. Die aufgezeigten Anwendungen bezeichnen solche Strukturen, die über bewegtes Wasser rückstandsfrei gereinigt werden können. Das ist bei Elektrohandwerkzeuggeräten aus Sicherheitsgründen nicht möglich. Über diese Selbstreinigung mit bewegtem Wasser hinausgehende Anwendungen selbstreinigender Oberflächen werden nicht aufgezeigt.

Die Aufgabe dieser Erfindung ist zur weiteren Verminderung obiger Nachteile eine weitere Lösung zum dauerhaften Staubschutz aufzuzeigen, welche insbesondere dem Eindringen der Kriechstäube oder der schädlichen Staubablagerung im Inneren von Geräten, insbesondere eines Elektrohandwerkzeuggeräts, zusätzlich entgegenwirkt.

Die Aufgabe wird durch die Merkmale der unabhängigen Ansprüche gelöst. Vorteilhafte Weiterbildungen ergeben sich aus den Unteransprüchen.

Im wesentlichen wird die Oberfläche des Staubschutzes als mikrokristallin genoppte Mikrostruktur ausgebildet. An derart mikroskopisch fein strukturierten Oberflächen wird vermittelt über die Adhäsion zwischen der Oberfläche und den Staubteilchen sowie über eine Mikroverhakung bevorzugt viel Staub angelagert. Diese, auch eine selbstreinigende Oberfläche notwendig aufweisende mikrokristallin genoppte Mikrostruktur, wird unter Abwesenheit von bewegtem Wasser dahingehend genutzt, dass sich gerade leicht und viel Staub anlagert. Unter derartigen Bedingungen wirken diese, unter Hinzunahme weiterer Merkmale, wie der hydrophoben Eigenschaft, dann selbstreinigenden Oberflächen gerade nicht selbstreinigend, sondern als Staubfallen.

Derartige künstliche Oberflächenstrukturen weisen Erhebungen und Vertiefungen im Bereich von 5 bis 100µm mit einem Abstand zueinander im Bereich zwischen 5 und 200µm auf und sind nicht durch Wasser mit oder ohne Detergenzien ablösbar, wobei die Erhebungen vorteilhaft aus hydrophobem Material bestehen. Vorteilhaft sind bspw. in Klebstoffe eingebettete hydrophobe Teilchen mit Teilchengrössen von etwa 7µm, wie Teflonpulver, oder Keramikpulver in einer später aushärtbaren Siloxanlösung. Zudem sind siebgeprägte Teflonbeschichtungen und die Aufbringung von Folien mit derartigen Oberflächen vorteilhaft.

Diese staubsammelnde Eigenschaft in Abwesenheit von bewegtem Wasser, welche der bisher aufgezeigten Hauptanwendung selbstreinigender Oberflächen schier entgegensteht, kann vorteilhaft für Staubfallen und für Staubbarrieren genutzt werden. Eine Kombination dieser Eigenschaft mit einer in diskreten Zeitabständen erfolgenden, über bewegtes Wasser vermittelten, Selbstreinigung einer selbstreinigenden Oberfläche ermöglicht eine vorteilhafte Reaktivierung dieser mikroskopisch aktiven Staubfallen und Staubbarrieren, deren künstliche Oberflächenstrukturen sich ansonsten mit der Zeit zusetzen und somit ihre Wirkung verlieren würden.

Der Staubeintrag in das Innere eines Gerätes, insbesondere eines Elektrohandwerkzeuggeräts, wird erfindungsgemäss durch eine auf der Oberfläche des Werkzeugs zwischen dem abrasiven Arbeitsbereich und dem Einspannbereich angeordnete, vorzugsweise in sich geschlossene, Staubbarriere mit mikrokristallin genoppter Mikrostruktur der Oberfläche vermindert. Derartige Staubbarrieren bestehen vorzugsweise aus räumlich begrenzten Flächenbereichen mit selbstreinigenden Oberflächen. Des weiteren wird alternativ oder in Kombination die dauerhafte Ablagerung des eingedrungenen Staubes vermindert durch eine zumindest teilweise im Inneren des Gerätes, vorteilhaft an unkritischen Stellen, angeordnete Staubfalle mit mikrokristallin genoppter Mikrostruktur der Oberfläche, vorteilhaft ausgebildet als räumlich begrenzten Flächenbereich mit selbstreinigender Oberfläche.

Weiterhin vorteilhaft oder in Kombination wird die Ausbreitung von Kriechstäuben an der äusseren Oberfläche des Gerätes durch Staubbarrieren mit mikrokristallin genoppter Mikrostruktur der Oberfläche vermindert. Diese sind bspw. zum Schutz vor Verschmutzung des Griffbereiches zwischen diesem und der Aufnahme des stauberzeugenden Werkzeugs angeordnet. Zur Vermeidung der Zerstörung der Mikrostruktur durch mechanische Beschädigung, Fettfilme usw. sind diese Staubbarrieren vorteilhaft in diese schützenden, konkaven Ausnehmungen des Gehäuses angeordnet. Weiter vorteilhaft ist dieser räumlich begrenzte Flächenbereich als selbstreinigende Oberfläche ausgebildet.

Die Staubbarriere ist bei stabförmigen Werkzeugen wie Bohrern vorteilhaft als mantelförmiger Ring um die Dreh- oder Schwingachse herum in der Nähe des Einspannbereiches ausgebildet. Für scheibenförmige Werkzeuge wie Sägeblätter bildet die Barriere vorteilhaft einen einseitigen oder beidseitigen Kreisring nahe der Dreh- oder Schwingachse auf den Stirnflächen des Werkzeugs aus. Ähnliche Staubbarrieren auf Innen- oder Aussenflächen sind bei zusätzlich um die Werkzeuge angeordneten und diesen bzw. dem Elektrohandwerkzeuggerät zugeordneten Staubschutzkappen vorteilhaft.

Die vorteilhafte, in diskreten Zeitabständen erfolgende Reinigung des Gerätes oder Werkzeugs mit bewegtem Wasser oder wasserhaltigem Aerosol bewirkt neben der regelmäßigen Säuberung insbesondere die Reaktivierung oder Auffrischung der staubsammelnden Wirkung der mikrokristallin genoppten Mikrostruktur der Oberfläche. Dies wird zudem speziell dadurch begünstigt, dass in einer Vielzahl von Einsatzfällen ein Elektrohandwerkzeuggerät eine Kühlung des Werkzeugs oder des Materials mit Wasser erfordert und somit durch Spritzeffekte beim abrasiven Materialabtrag und die Luftbewegung unweigerlich feinstverteilte Wassertropfen auf die Werkzeugoberfläche und in das Innere des Elektrohandwerkzeuggeräts gelangen. Bei Elektrohandwerkzeuggeräten ist aus sicherheitstechnischen Aspekten heraus die Zuordnung eines im Versorgungsstrompfad schaltend angeordneten Feuchtigkeitssensors im Inneren des Gehäuses vorteilhaft, welcher die Spannungsversorgung dessen nur im hinreichend trockenen Zustand freigibt.

Die Erfindung wird nachfolgend für eine vorteilhafte Ausführung am Beispiel eines abrasiv Material abtragenden Elektrohandwerkzeuggeräts und eines Werkzeugs beschrieben, ohne sich darauf einzuschränken. Es zeigen
Fig. 1 ein teilweise geschnittenes Elektrohandwerkzeuggerät mit Staubbarriere und Staubfalle
Fig. 2 ein stiftförmiges Werkzeug mit Staubbarriere
Fig. 3 ein scheibenförmiges Werkzeug mit Staubbarriere.

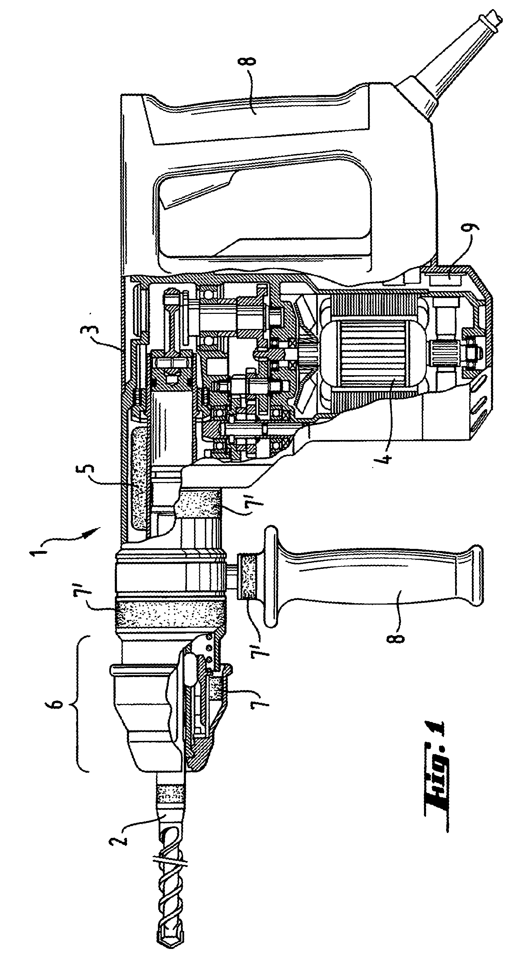

Nach Fig. 1 weist ein Elektrohandwerkzeuggerät 1 mit einem abrasiv Material abtragenden Werkzeug 2 und einem im Inneren eines Gehäuses 3 angeordneten elektrischen Antrieb 4 eine Staubfalle 5 mit mikrokristallin genoppter Mikrostruktur der Oberfläche in einem begrenzten Flächenbereich der inneren freien Oberfläche des Gehäuses 3 auf, wobei die Staubfalle 5 vorteilhaft an einem unkritischen Ort sowie nahe der Aufnahme 6 des Werkzeugs 2 angeordnet ist und optional als selbstreinigende Oberfläche ausgebildet ist. Zudem ist nahe der Aufnahme des Werkzeugs 2 eine Staubbarriere 7 im Inneren des Gehäuses und optional eine Staubbarriere 7' an der Aussenfläche des Gehäuses 3 zwischen der Aufnahme 6 und dem Griffbereich 8 angeordnet und optional als selbstreinigende Oberfläche ausgebildet. Die Staubfallen 5 und die Staubbarrieren 7 haben vorteilhaft eine kleinste Flächendimension von einigen mm bis wenigen cm. Der an den selbstreinigenden Oberflächen sich ablagernde Staub wird regelmässig durch bewegtes Wasser in Form von Wassertröpfchen entfernt und somit die Staubfalle 5 bzw. die Staubbarriere 7 wieder reaktiviert. Zur Gewährleistung der Sicherheit ist optional im Gehäuse 3 ein Feuchtigkeitssensors 9 zur Schaltung des Versorgungsstrompfads angeordnet.

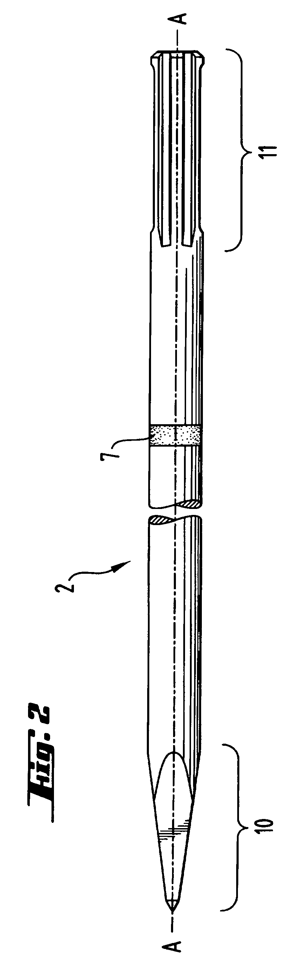

Nach Fig. 2 weist ein stiftförmiges Werkzeug 2 zwischen einem abrasiven Arbeitsbereich 10 und einem Einspannbereich 11 in dessen Nähe eine Staubbarriere 7 mit einer selbstreinigenden Oberfläche auf, vorzugsweise als Beschichtung ausgebildet, welche sich als Ring mit einer Breite von etwa 1 mm bis 50mm um die Dreh- oder Schwingachse A des Werkzeugs 2 erstreckt. Ein Beispiel hierfür ist ein Bohrer oder ein Meissel.

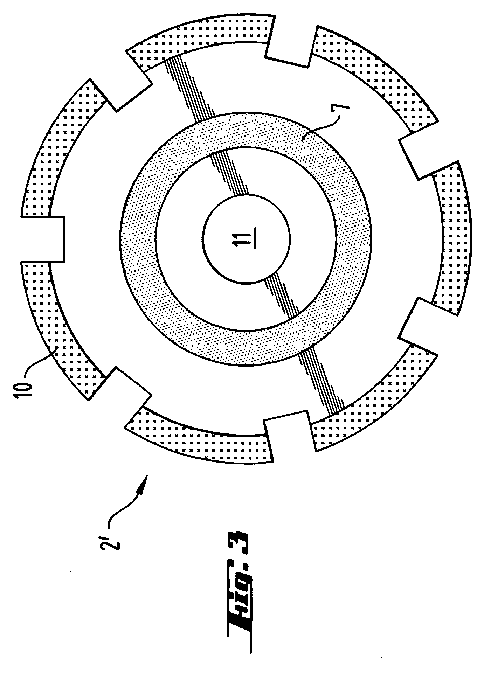

Nach Fig. 3 weist das scheibenförmige Werkzeug 2' zwischen einem abrasiven Arbeitsbereich 10 und einem Einspannbereich 11 in dessen Nähe eine Staubbarriere 7 mit einer selbstreinigenden Oberfläche auf, vorzugsweise als Beschichtung ausgebildet, welche sich als zweiseitiger Kreisring mit einer Höhe von etwa 1mm bis 50mm um die Dreh- oder Schwingachse A des Werkzeugs 2' erstreckt. Ein Beispiel hierfür ist ein Sägeblatt, oder eine Trennscheibe.

## Patentansprüche

1. Staubschutz zur Verringerung der Ausbreitung von Kriechstäuben entlang einer freien Oberflächen durch eine örtlich begrenzte Staubfalle (5) oder eine Staubbarriere (7), wobei der als Staubbarriere (7) ausgebildete Staubschutz einer Bewegung einzelner Staubteilchen entlang dieser freien Oberfläche über die Staubbarriere (7) hinweg einen Widerstand entgegensetzt, wobei sich bevorzugt an der Oberfläche der Staubfalle (5) bzw. der Staubbarriere (7) einzelne Staubteilchen anlagern, **dadurch gekennzeichnet, dass** die Oberfläche der Staubfalle (5) bzw. der Staubbarriere (7) eine künstliche mikrokristallin genoppte Mikrostruktur aufweist, deren Oberflächenstruktur Erhebungen und Vertiefungen im Bereich von 5 bis 100µm mit einem Abstand zueinander im Bereich zwischen 5 und 200 µm aufweist.

2. Staubschutz nach Anspruch 1, **dadurch gekennzeichnet, dass** die Oberfläche der Staubfalle (5) bzw. der Staubbarriere (7) zumindest teilweise hydrophob ist und nicht durch Wasser mit oder ohne Detergenzien ablösbar ist.

3. Staubschutz nach einem der vorhergehenden Ansprüche, **dadurch gekennzeichnet, dass** die Staubfalle (5) bzw. die Staubbarriere (7) durch eine Beschichtung ausgebildet ist.

4. Staubschutz nach Anspruch 3, **dadurch gekennzeichnet, dass** die Beschichtung aus in Klebstoff oder in aushärtbarer Siloxanlösung eingebettete dispergierten Teilchen oder siebgeprägt ist.

5. Verwendung eines Staubschutzes nach einem der Ansprüche 1 bis 4 an einer Innenkontur oder an einer Aussenkontur eines Gehäuses (3) von Geräten.

6. Verwendung eines Staubschutzes nach Anspruch 5 bei einem Elektrohandwerkzeuggerät (1) innerhalb oder nahe einer dem Einsatz von Werkzeugen (2) dienenden Aufnahme (6).

7. Verwendung eines Staubschutzes nach Anspruch 6 an der Aussenkontur des Gehäuses (3) zwischen einem Griffbereich (8) und der dem Einsatz von Werkzeugen (2) dienenden Aufnahme (6).

8. Verwendung eines Staubschutzes nach einem der Ansprüche 2 bis 4 an einer Innenkontur eines Gehäuses (3) eines Elektrohandwerkzeuggerätes (1) mit einem jeweils im Inneren eines Gehäuses (3) angeordneten elektrischen Antriebs (4) und eines optionalen Feuchtigkeitssensors (9) zur Schaltung des Versorgungsstrompfads.

9. Verwendung eines Staubschutzes nach einem der Ansprüche 1 bis 4 an einer Aussenkontur von Werkzeugen (2) in Form eines mantelförmigen Ringes bei stiftförmigen Werkzeugen (2) bzw. in Form eines ein- oder zweiseitigen Kreisringes bei scheibenförmigen Werkzeugen (2') um eine Dreh- oder Schwingachse (A).

10. Verwendung eines Staubschutzes nach einem der Ansprüche 1 bis 4 an Staubschutzkappen, welche einem Elektrohandwerkzeuggerät (1) oder einem Werkzeug (2) zugeordnet sind.

## Claims

1. Dust seal for reducing the spread of dusts tracking along a clear surface by means of a locally delimited dust trap (5) or a dust barrier (7), with the dust seal, which is in the form of a dust barrier (7), presenting resistance to movement across the dust barrier (7) of individual dust particles along said clear surface, and with individual dust particles preferentially being deposited on the surface of the dust trap (5), or dust barrier (7), **characterised in that** the surface of the dust trap (5), or dust barrier (7), incorporates a synthetic microstructure with a microcrystalline burled finish, the surface structure of which incorporates raised areas and depressions ranging from 5 to 100 *µ*m in size and spaced apart from one another by a distance ranging from 5 to 200 µm.

2. Dust seal according to claim 1, **characterised in that** the surface of the dust trap (5), or dust barrier (7), is at least partially water-repellent and cannot be detached by means of water, with or without detergents.

3. Dust seal according to either one of the preceding claims, **characterised in that** the dust trap (5), or dust barrier (7), is developed in the form of a coating.

4. Dust seal according to claim 3, **characterised in that** the coating is made up of dispersed particles embedded in adhesive or in curable siloxane solution, or is screen-embossed.

5. Use of a dust seal according to any one of claims 1 to 4 on an inner contour or on an outer contour of an appliance housing (3).

6. Use of a dust seal according to claim 5 with an electrical small appliance (1) within or close to a locator (6) used for the insertion of tools (2).

7. Use of a dust seal according to claim 6 on the outer contour of the housing (3), between a gripping area (8) and the locator (6) used for the insertion of tools (2).

8. Use of a dust seal according to any one of claims 2 to 4 on an inner contour of a housing (3) of an electrical small appliance (1) featuring an electric drive unit (4) arranged in each case internally in a housing (3) and an optional moisture sensor (9) for energising the supply current path.

9. Use of a dust seal according to any one of claims 1 to 4 on an outer contour of tools (2) in the form of a jacket-shaped ring in the case of pencil-shaped tools (2) or in the form of a single-sided or double-sided annulus in the case of plate-like tools (2') about an axis (A) of rotation or oscillation.

10. Use of a dust seal according to any one of claims 1 to 4 on dust sealing caps operatively associated with an electrical small appliance (1) or a tool (2).

## Revendications

1. Dispositif antipoussière pour réduire la propagation de poussières infiltrées le long d'une surface libre au moyen d'un piège à poussière délimité localement (5) ou d'une barrière à poussière (7), le dispositif antipoussière conformé en barrière à poussière (7) opposant une résistance au déplacement de particules individuelles de poussière le long de cette surface libre au-delà de la barrière à poussière (7), de préférence des particules individuelles de poussière s'accumulant à la surface du piège à poussière (5), respectivement de la barrière à poussière (7), la surface du piège à poussière (5), respectivement de la barrière à poussière (7) présentant une microstructure artificielle à plots cristallins dont la structure superficielle comporte des reliefs et des creux compris entre 5 et 100 µm avec un écartement mutuel compris entre 5 et 200 µm.

2. Dispositif antipoussière selon la revendication 1, **caractérisé en ce que** la surface du piège à poussière (5), respectivement de la barrière à poussière (7) est au moins en partie hydrophobe et n'est pas détachable à l'eau avec ou sans détergent.

3. Dispositif antipoussière selon une des revendications précédentes, **caractérisé en ce que** le piège à poussière (5), respectivement la barrière à poussière (7) est formé par un revêtement.

4. Dispositif antipoussière selon la revendication 3, **caractérisé en ce que** le revêtement est constitué de particules dispersées, noyées dans de l'adhésif ou dans une solution durcissable de siloxane, ou est sérigraphié.

5. Utilisation d'un dispositif antipoussière selon une des revendications 1 à 4 sur un contour intérieur ou sur un contour extérieur d'un carter (3) d'outils.

6. Utilisation d'un dispositif antipoussière selon la revendication 5 dans un outil électrique à main (1) à l'intérieur ou à proximité d'un mandrin (6) servant à l'insertion de garnitures (2).

7. Utilisation d'un dispositif antipoussière selon la revendication 6 sur le contour extérieur du carter (3) entre une zone de préhension (8) et le mandrin (6) servant à l'insertion de garnitures (2).

8. Utilisation d'un dispositif antipoussière selon une des revendications 2 à 4 sur un contour intérieur d'un carter (3) d'un outil électrique à main (1) comprenant un moyen d'entraînement électrique (4) disposé à l'intérieur d'un carter (3) et un capteur d'humidité optionnel (9) pour commuter le circuit de courant d'alimentation.

9. Utilisation d'un dispositif antipoussière selon une des revendications 1 à 4 sur un contour extérieur d'outillages (2) sous la forme d'un anneau périphérique dans le cas d'outillages conformés en broches (2), respectivement sous la forme d'une couronne sur une ou deux faces dans le cas d'outillages conformés en disques (2') par rapport à un axe de rotation ou d'oscillation (A).

10. Utilisation d'un dispositif antipoussière selon une des revendications 1 à 4 sur des coiffes antipoussière associées à un outil électrique à main (1) ou à un outillage (2).
